# EUROPEAN PATENT SPECIFICATION

(11) **EP 4 004 321 B1**
(45) Date of publication and mention of the grant of the patent: **28.01.2026**
(21) Application number: 20845884.4
(22) Date of filing: 30.07.2020
(51) Int. Cl.: B60J 1/17, B60J 5/04, E05F 15/70

(54) **A METHOD OF SCISSOR DOOR WINDOW OPERATION**
VERFAHREN ZUM BETRIEB EINES SCHERENTÜRFENSTERS
PROCÉDÉ DE FONCTIONNEMENT D'UNE FENÊTRE DE PORTE EN ÉLYTRE

(30) Priority: 30.07.2019 US 201916526600
(43) Date of publication of application: 01.06.2022
(73) Proprietor: Karma Automotive LLC, Irvine, CA 92618 (US)
(72) Inventor: GEORGE, Todd Maurice, Irvine, California 92618 (US)
(74) Representative: Müller, Wolfram Hubertus
(86) International application number: PCT/US2020/044295
(87) International publication number: WO 2021/022062

(56) References cited:
- DE-A1- 102005 050 255
- JP-A- 2014 101 627
- JP-A- 2018 066 204
- JP-A- 2018 066 204
- KR-A- 20110 112 592
- KR-A- 20180 026 969
- US-A1- 2010 276 966
- US-A1- 2010 276 966
- US-A1- 2017 314 317

## Description

The present application is related to U.S. Patent Application Serial No. 16/376,991 filed on April 5, 2019.

### BACKGROUND

The present disclosure relates to a system for controlling the operation of a window installed in a door of a vehicle, especially a scissor door of a vehicle.

The use of scissor doors and other doors that open vertically for vehicles has allowed for the design of vehicles with special clearance requirements, especially vehicles that would require an exceptional amount of horizontal space for doors that open horizontally. However, scissor doors and similar vehicle doors introduce a new clearance problem - when the vehicle door is in its open and vertical position, it may require more vertical clearance space than is available in many low roof structures. Often, this vertical clearance issue is exacerbated by a window associated with the vertically opening door, wherein the window adds an extra few inches to the open door's vertical profile. Depending on the design of the window, it may be possible to roll down the window to gain the extra vertical clearance needed, but leaving this to the judgment of a vehicle occupant risks the occupant opening the door but forgetting to roll down the window. In this scenario, it may be possible for the occupant to damage the window, door, or roof by opening the door without rolling down the window.

It is desirable to find a system for controlling the operation of a window installed in a door of a vehicle, wherein controlling includes lowering the window when the door opens.

Document US 2017/314317 A1 discloses a vehicle and a method for lowering a window pane of a door of a vehicle. The document regards to the use case when the vehicle door can only be opened to a small degree, e.g., because an obstacle prevents the door from opening further. In this scenario, the window pane is lowered as little as possible for a passenger to enter and exit the vehicle by measuring the door opening angle.

Document US 2010/276966 A1 discloses a scissor door for a vehicle. The scissor door opens from a point of rotation upwardly. A system to operate the window pane is not disclosed.

Document JP 2018 066204 A relates to a door latch device for holding a door in a closed state, and a vehicle window glass opening / closing system. The window glass opening / closing system includes a window regulator that opens and closes the window glass based on switches. The system includes an engagement mechanism housing that holds a vehicle door in a closed state, and an operation mechanism housing that accommodates a locking / unlocking mechanism for the door.

### SUMMARY

The invention provides for a system for controlling the operation of a window installed in a door of a vehicle with the features of claim 1. Embodiments of the invention are identified in the dependent claims.

Accordingly, disclosed herein is a system for controlling the operation of a window installed in a door of a vehicle. According to the invention, the system comprises a control module, a vehicle door configured to move upwardly from a closed position to a fully open position, a window configured to move between a first up position and a second down position in which the window is stored in the vehicle door, and a mechanism to move the window between the first up position and the second down position. According to the invention, the control module is configured to direct the mechanism to move the window into the second down position when the control module has received a signal indicating that action has been taken to move the vehicle door towards the fully open position. In one embodiment, the vehicle door is a scissor door. In one embodiment, the vehicle door is configured to move by means of a multi-axis hinge.

**In** another embodiment, the system includes a window sensor that detects the position of the window and provides a window signal to the control module that is representative of the position of the window. In another embodiment, the control module directs the mechanism to move the window into the second down position when the position of the window is indicated to be a predetermined amount away from the second down position. According to the invention, the control module directs the mechanism to move the window into the second down position when the position of the vehicle door is indicated to be a predetermined amount away from the closed condition.

In another embodiment, wherein the system operates to reduce the vertical profile of the vehicle door when the vehicle door is in an open position.

In another embodiment, the control module is configured to direct the mechanism to move the window into the first up position when the control module has received a signal indicating that action has been taken to move the vehicle door towards the closed position.

Other aspects, features, and techniques will be apparent to one skilled in the relevant art in view of the following detailed description of the embodiments.

### BRIEF DESCRIPTION OF THE DRAWINGS

The features, objects, and advantages of the disclosed embodiments will become more apparent from the detailed description set forth below when taken in conjunction with the drawings in which like reference characters identify correspondingly throughout and wherein:
FIG. 1 is a perspective view of an exemplary embodiment of a vehicle in which a window control system may be installed.

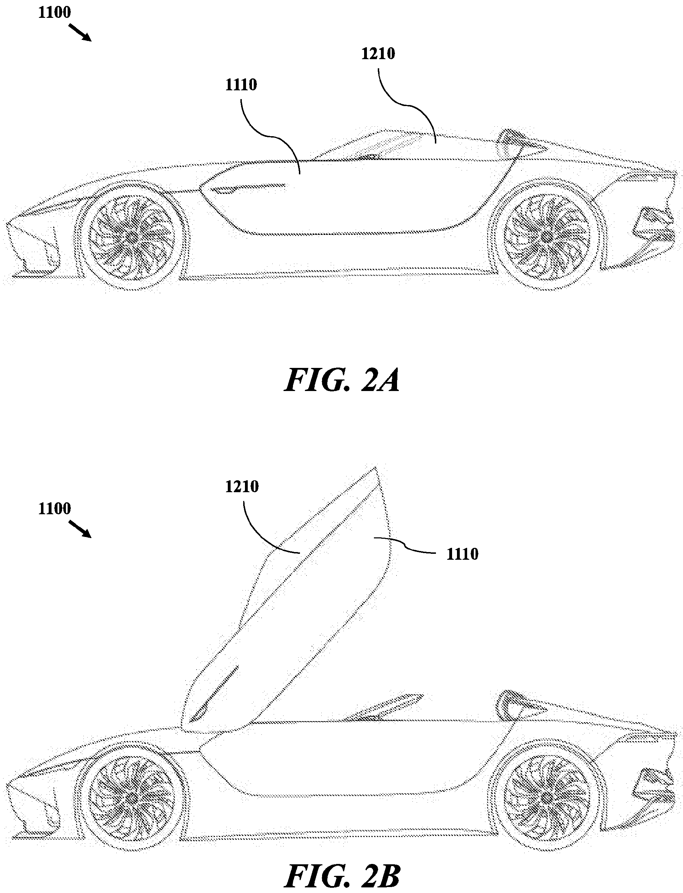

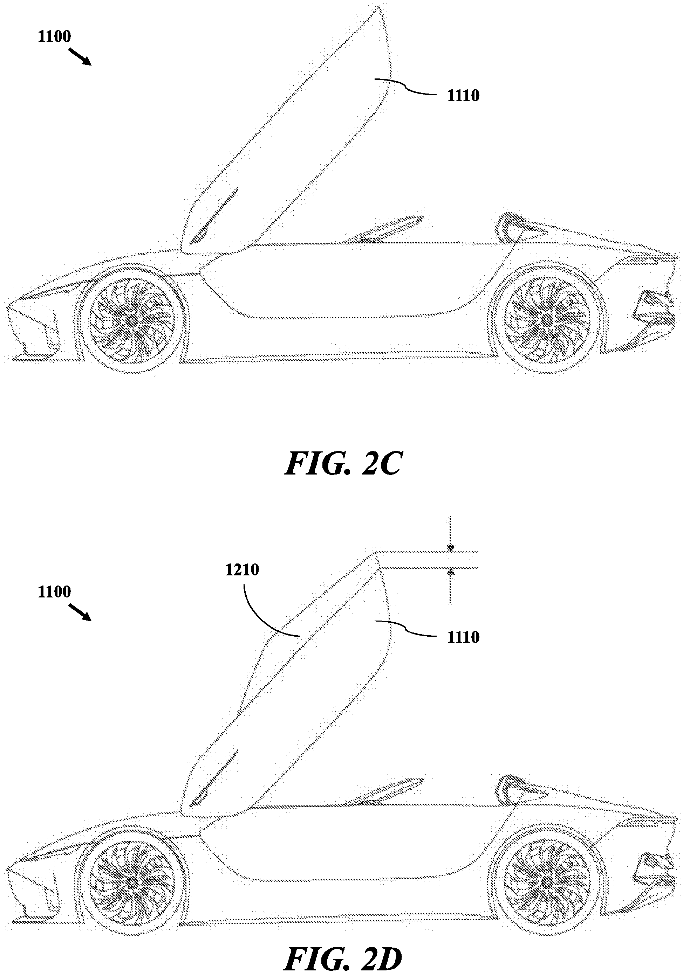

FIG. 2A is a side view of an exemplary embodiment of a vehicle door with a window operated by a window control system, wherein the vehicle door is in a closed position and the window is in a first up position. FIG. 2B is a side view of the vehicle door of FIG. 2A, wherein the vehicle door is in a fully open position and the window is in the first up position. FIG. 2C is a side view of the vehicle door of FIG. 2A, wherein the vehicle door is in a fully open position and the window is in a second down position. FIG. 2D is a side view of the vehicle door of FIG. 2A highlighting the difference in clearance when the window is in the first up position and when the window is in the second down position, wherein the vehicle door is in the fully open position.
FIG. 3 is a block diagram of an exemplary embodiment of a window control system for controlling the operation of a window installed in a door of a vehicle.
FIG. 4 is a perspective view of an exemplary embodiment of a vehicle including a multi-axis hinge mechanism for a stylized vehicle door.
FIG. 5 is a side view of an exemplary embodiment of a multi-axis hinge mechanism and an attached vehicle door.
FIG. 6A is a perspective view of an exemplary embodiment of a multi-axis hinge mechanism and an attached vehicle door. FIG. 6B is an exploded perspective view of an exemplary embodiment of a multi-axis hinge mechanism and an attached vehicle door.
FIG. 7 is a perspective view of an exemplary embodiment of the multi-axis hinge mechanism of FIG. 3A in a first closed position.
FIG. 8 is a side view of the multi-axis hinge mechanism of FIG. 6A in a first closed position.
FIG. 9 is a bottom view of the multi-axis hinge mechanism of FIG. 6A in a first closed position.
FIG. 10 is a perspective view of the multi-axis hinge mechanism of FIG. 6A in a second open position.
FIG. 11 is a side view of the multi-axis hinge mechanism of FIG. 6A in a second open position.
FIG. 12 is a bottom view of the multi-axis hinge mechanism of FIG. 6A in a second open position.
FIG. 13 is a side view of the multi-axis hinge mechanism of FIG. 6A comparing the first closed position to the second open position.
FIG. 14 is a bottom view of the multi-axis hinge mechanism of FIG. 6A comparing the first closed position to the second open position.

### DETAILED DESCRIPTION

One aspect of the disclosure is directed to a window control system for controlling the operation of a window installed in a door of a vehicle.

References throughout this document to "one embodiment," "certain embodiments," "an embodiment," or similar term mean that a particular feature, structure, or characteristic described in connection with the embodiment is included in at least one embodiment. Thus, the appearances of such phrases in various places throughout this specification are not necessarily all referring to the same embodiment. Furthermore, the particular features, structures, or characteristics may be combined in any suitable manner on one or more embodiments without limitation. For example, two or more of the innovative systems described herein may be combined in a single system, but the application is not limited to the specific exemplary combinations of systems that are described herein.

As used herein, the terms "a" or "an" shall mean one or more than one. The term "plurality" shall mean two or more than two. The term "another" is defined as a second or more. The terms "including" and/or "having" are open ended (e.g., comprising). The term "or" as used herein is to be interpreted as inclusive or meaning any one or any combination. Therefore, "A, B or C" means "any of the following: A; B; C; A and B; A and C; B and C; A, B and C". An exception to this definition will occur only when a combination of elements, functions, steps or acts are in some way inherently mutually exclusive.

A detailed description of various embodiments is provided; however, it is to be understood that the disclosed embodiments are merely exemplary and may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the disclosed embodiments.

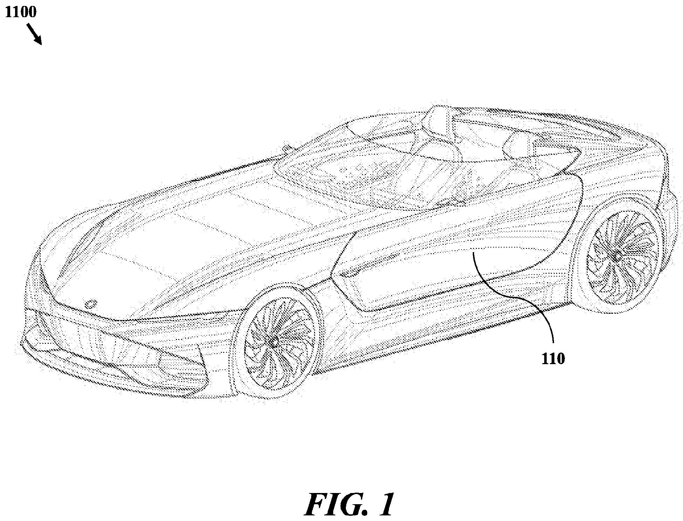

FIG. 1 is a perspective view of an exemplary embodiment of a vehicle 1100 in which a window control system 1200 may be installed. The vehicle 1100 depicted in FIG. 1 is exemplary; the window control system 1200 described in this document may be used with any vehicle in need of a system for controlling the operation of a window installed in a door of a vehicle.

FIG. 2A is a side view of an exemplary embodiment of a vehicle door 1110 with a window 1210 operated by a window control system 1200, wherein the vehicle door 1110 is in a closed position and the window 1210 is in a first up position. In one embodiment, the vehicle door 1110 may be a scissor door.

FIG. 2B is a side view of the vehicle door 1110 of FIG. 2A, wherein the vehicle door 1110 is in a fully open position and the window 1210 is in the first up position. In one embodiment, the vehicle door 1110 is configured to move upwardly from the closed position to a fully open position. In one embodiment, at any point while the vehicle door 1110 is in motion between the closed position and the fully open position, the vehicle door 1110 may stop at a position between the closed position and the fully open position. In one embodiment, the vehicle door 1110 moves by means of a multi-axis hinge such as the multi-axis hinge disclosed in U.S. Patent Application No. 16/376,991.

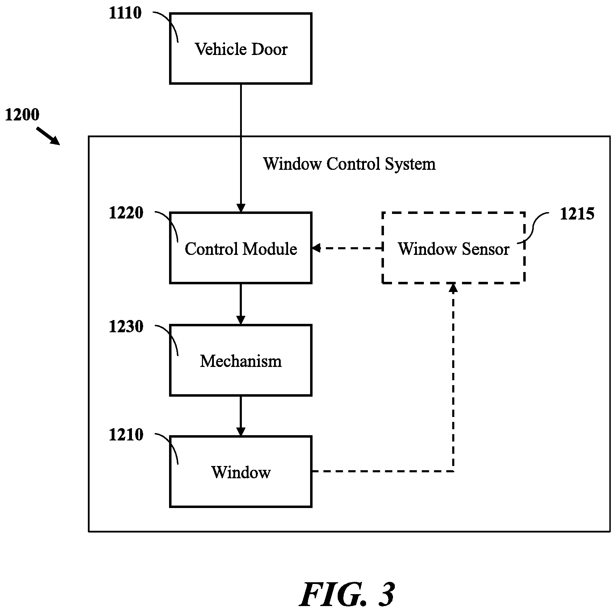

FIG. 2C is a side view of the vehicle door 1110 of FIG. 2A, wherein the vehicle door 1110 is in a fully open position and the window 1210 is in a second down position. In one embodiment, the window 1210 is configured to move between the first up position and the second down position. In one embodiment, the second down position is a position in which the window 1210 is stored in the vehicle door 1110. In one embodiment, while the window 1210 is stored in the vehicle door 1110, the window 1210 is out of sight of any observers of the vehicle 1100 or occupants of the vehicle 1100. In one embodiment, at any point while the window 1210 is in motion between the first up position and a second down position, the window 1210 may stop at a position between the first up position and the second down position. In one embodiment, the window 1210 may move by means of a mechanism 1230 (see FIG. 3) of the window control system 1200.

FIG. 2D is a side view of the vehicle door 1110 of FIG. 2A highlighting the difference in clearance when the window 1210 is in the first up position and when the window 1210 is in the second down position, wherein the vehicle door 1110 is in the fully open position. In one embodiment, the window control system 1200 operates to reduce the vertical profile of the vehicle door 1110 when the vehicle door is in an open position or the fully open position. In one embodiment, the window control system 1200 operates to reduce the vertical profile of the vehicle door 1110 by means of controlling the position of the window 1210 between the first up position and the second down position.

FIG. 3 is a block diagram of an exemplary embodiment of a window control system 1200 for controlling the operation of a window 1210 installed in a door 1210 of a vehicle 1100. In one embodiment, the window control system 1200 includes a window 1210, a control module 1220, and a mechanism 1230 for moving the window 1210. In one embodiment, the control module 1220 is configured to receive a signal indicating any actions taken with respect to the vehicle door 1110. In one embodiment, when the control module 1220 receives a signal indicating that action has been taken to move the vehicle door 1110 towards the fully open position, the control module 1220 directs the mechanism 1230 to move the window 1210 into the second down position. In one embodiment, when the control module 1220 receives a signal indicating that action has been taken to move the vehicle door 1110 towards the closed position, the control module 1220 directs the mechanism 1230 to move the window 1210 into the first up position.

In one embodiment, the window control system 1200 includes a window sensor 1215 that detects the position of the window 1210. In one embodiment, the window sensor 1215 provides a window signal to the control module 1220 that is representative of the position of the window 1210. In one embodiment, when the position of the window 1210 is indicated to be a predetermined amount away from the second down position, the control module 1220 directs the mechanism 1230 to move the window into the second down position. According to the invention, when the position of the vehicle door 1110 is indicated to be a predetermined amount away from the closed position, the control module 1220 directs the mechanism 1230 to move the window into the second down position.

A description of the multi-axis hinge for a vehicle door follows below.

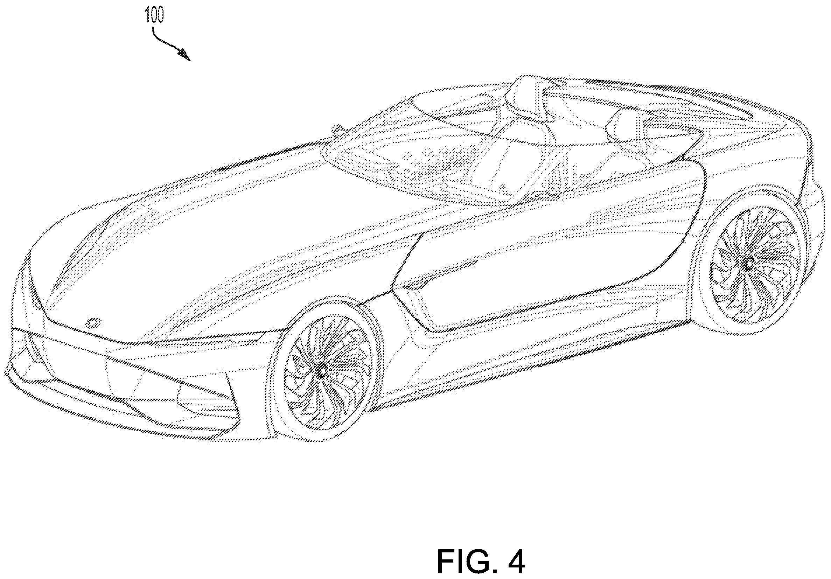

FIG. 4 is a perspective view of an exemplary embodiment of a vehicle 100 including a multi-axis hinge mechanism 200 for a vehicle door 300. In the depicted embodiment, the multi-axis hinge mechanism 200 and the vehicle door 300 are in a first closed position such that the vehicle cabin is enclosed and the vehicle 100 can travel safely. The vehicle 100 is depicted as a sports vehicle, but the multi-axis hinge mechanism 200 described may be used with any passenger vehicle or other vehicle that requires a vehicle door.

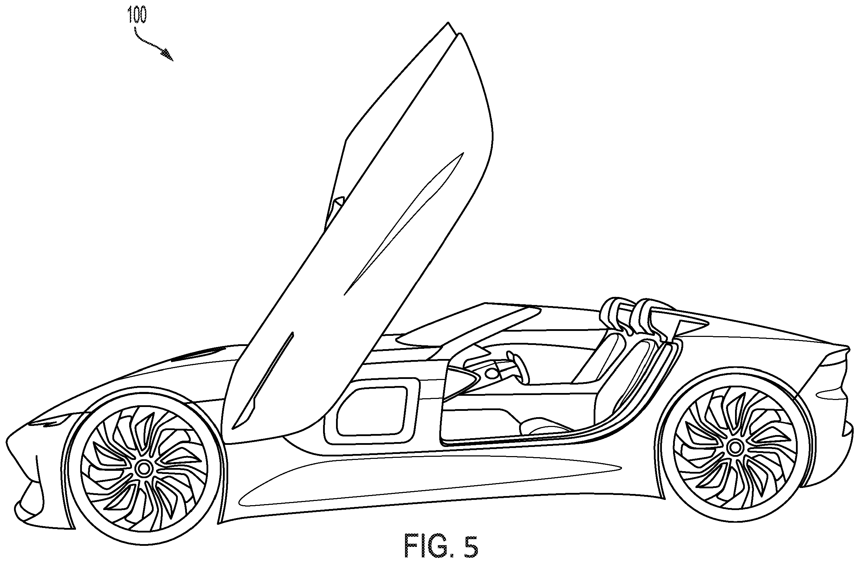

FIG. 5 is a perspective view of an exemplary embodiment of a multi-axis hinge mechanism 200 and an attached vehicle door 300. In the depicted embodiment, the multi-axis hinge mechanism 200 and the vehicle door 300 are in a second open position such that the vehicle cabin is accessible and vehicle occupants may safely enter and exit the vehicle 100 or access the forward luggage compartment 110.

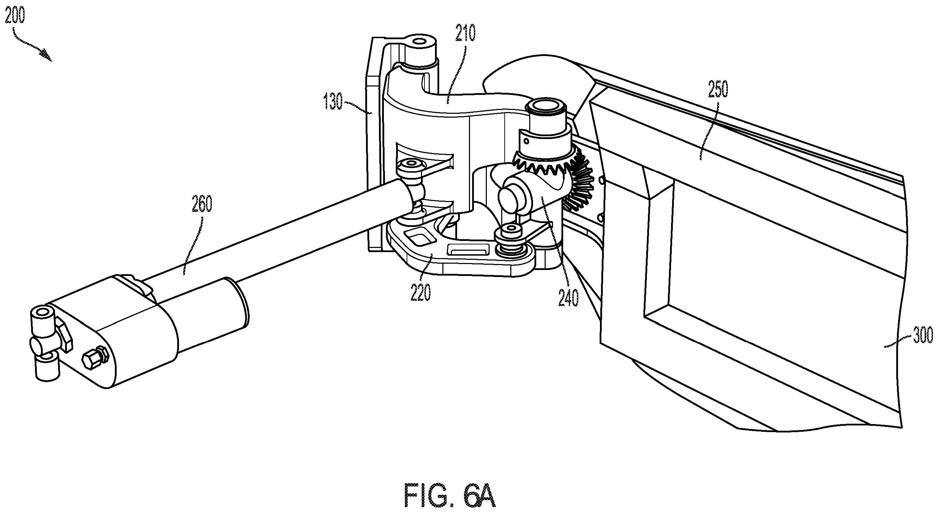

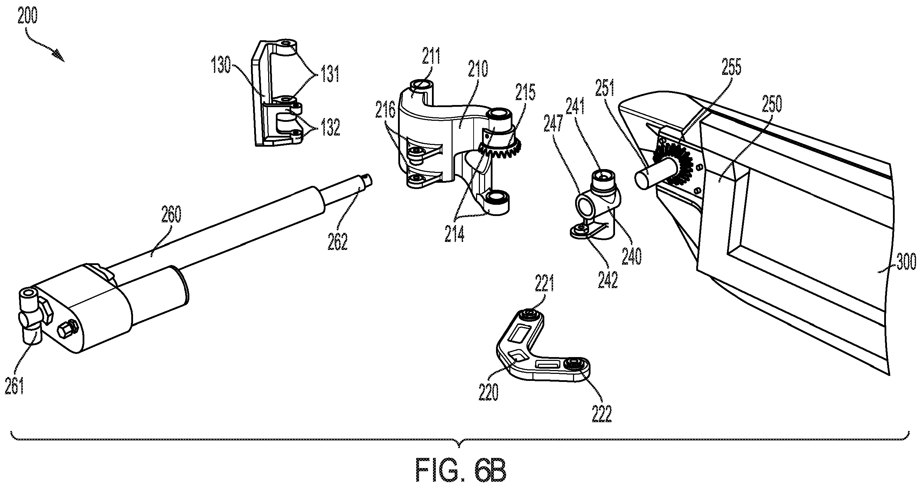

FIG. 6A is a perspective view of an exemplary embodiment of a multi-axis hinge mechanism 200 and an attached vehicle door 300. FIG. 6B is an exploded perspective view of an exemplary embodiment of a multi-axis hinge mechanism 200 and an attached vehicle door 300. According to one embodiment, the multi-axis hinge mechanism 200 includes a first arm 210, a second arm 220, a gearbox hub 240, a door frame 250, and an actuator 260.

According to one embodiment, the first end of the first arm 211 may be pivotally attached to a vehicle bracket 130 by a first pivot joint 131 and the second end of the first arm 214 may be pivotally connected to the first gearbox post 241. According to one embodiment, the second end of the first arm 214 includes a first gear 215 that is fixedly attached to the second end of the first arm 214. The first end of the second arm 221 may be pivotally attached to the vehicle bracket 130 by a second pivot joint 132 and the second end of the second arm 222 may be pivotally connected to the gearbox hub 240 by a gearbox pivot arm extension 242.

According to one embodiment, the door frame 250 is connected to the multi-axis hinge mechanism 200 by a second gearbox rod 251 that rotates about a second axis, wherein the second gearbox rod 251 is held perpendicularly by a gearbox hub bearing 247. The second gearbox rod 251 may rotate within the gearbox hub bearing 247. In one embodiment, the door frame 250 includes a second gear 255 that is fixedly attached to both the vehicle door 300 and the second gearbox rod 251. In one embodiment, the second gear 255 is concentric with the second gearbox rod 251. In one embodiment, a vehicle door 300 may be mounted to the door frame 250.

According to one embodiment, the multi-axis hinge mechanism 200 may include an actuator 260 that is attached to the vehicle 100 by a third pivot pin or rod 261 and pivotally attached to an actuator socket of the first arm 216 by an actuator pivot joint 262.

According to one embodiment, the first pivot joint 211, the second pivot joint 221, the gearbox pivot extension arm 242, the third pivot pin 261, and the actuator pivot joint 262 may protrude at a distance from their respective attach points to the vehicle frame 130, the first arm 210, or the gearbox hub 240. This may be especially significant for the gearbox pivot extension arm 242, as protruding the gearbox pivot extension arm 242 may allow the motion of the second arm 220 to apply leverage to the gearbox hub 240 and cause the first gearbox post 241 to rotate about a first axis.

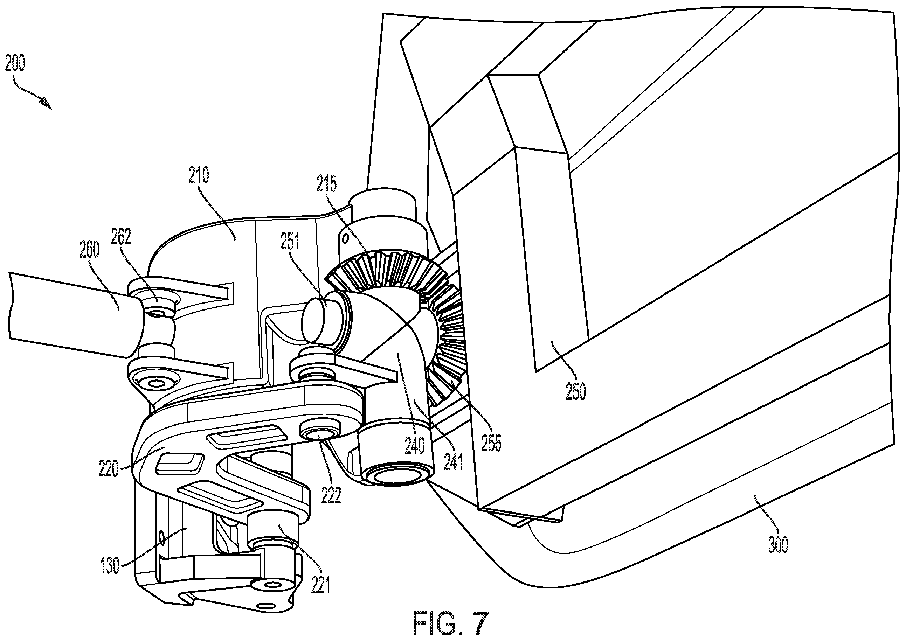

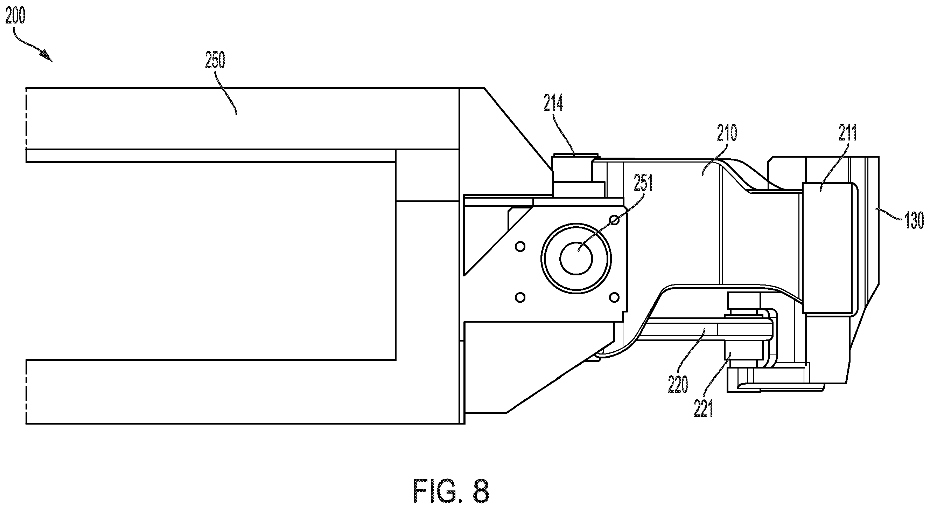

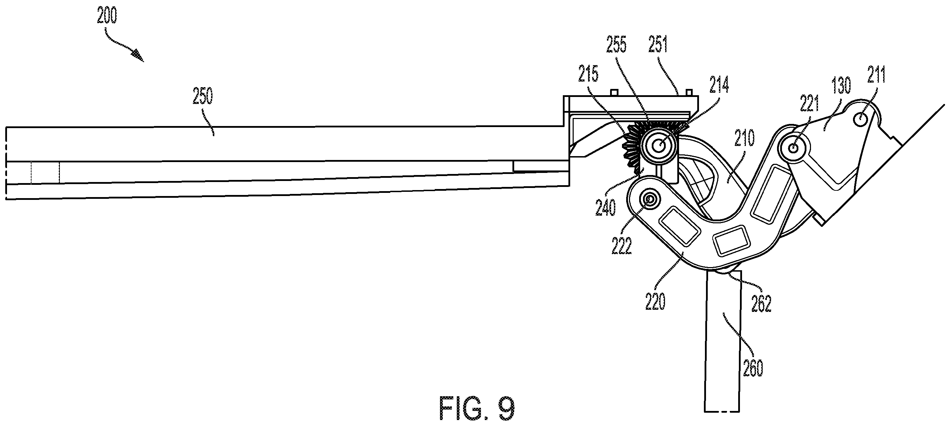

FIG. 7 is a perspective view of an exemplary embodiment of the multi-axis hinge mechanism 200 of FIG. 6A in a first closed position. FIG. 8 is a side view of the multi-axis hinge mechanism 200 of FIG. 6A in a first closed position. FIG. 9 is a bottom view of the multi-axis hinge mechanism 200 of FIG. 6A in a first closed position.

The actuator 260 may translate lateral motion into rotational motion of the first arm 210 and the second arm 220, wherein the pivoting motion of each arm is performed about the first pivot joint 211 and the second pivot joint 221, respectively. This combined pivoting motion of the first arm 210 and the second arm 220 may translate into a pair of motions of the gearbox hub 240: the motion of the first arm 210 may translate into a lateral motion of the gearbox hub 240, while the motion of the second arm 220 may translate through the gearbox pivot joint 222 into a pivoting motion (hereinafter, the first pivoting motion) of the first gearbox post 241 about a first axis.

According to one embodiment, the first pivoting motion of the first gearbox post 241 may translate into a pivoting or rotating motion (hereinafter, the second pivoting motion) of the second gearbox rod 251. This translation of pivoting motions may be conducted via the first gear 215 and the second gear 255, which may be configured as bevel gears that translate pivoting or rotational motion from rotation about one axis to rotation about a second, non-parallel axis. In order to facilitate this translation of pivoting motions, the first gear 215 and the second gear 255 may be meshed with one another such that their gear teeth are interlocked. In one embodiment, the door frame 250 may pivot in a manner corresponding with the second pivoting motion as a result of being fixed to both the second gearbox rod 251 and the second gear 255.

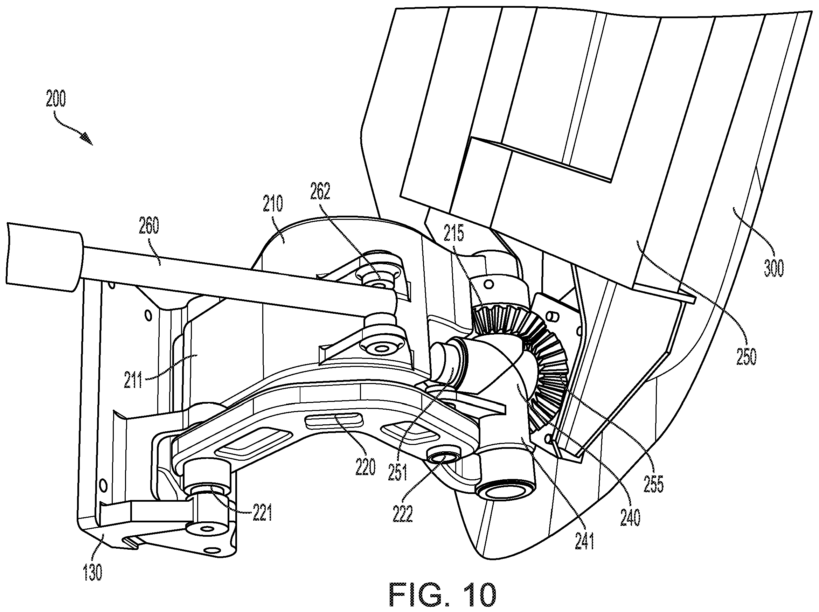

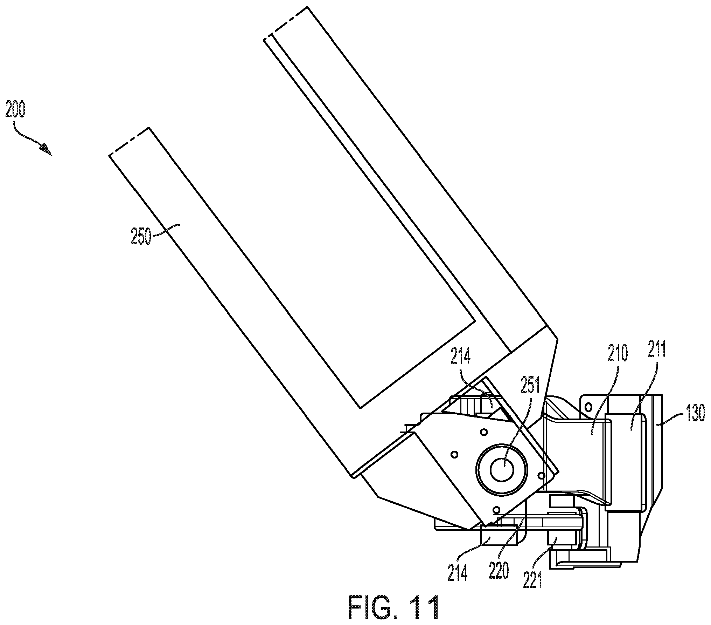

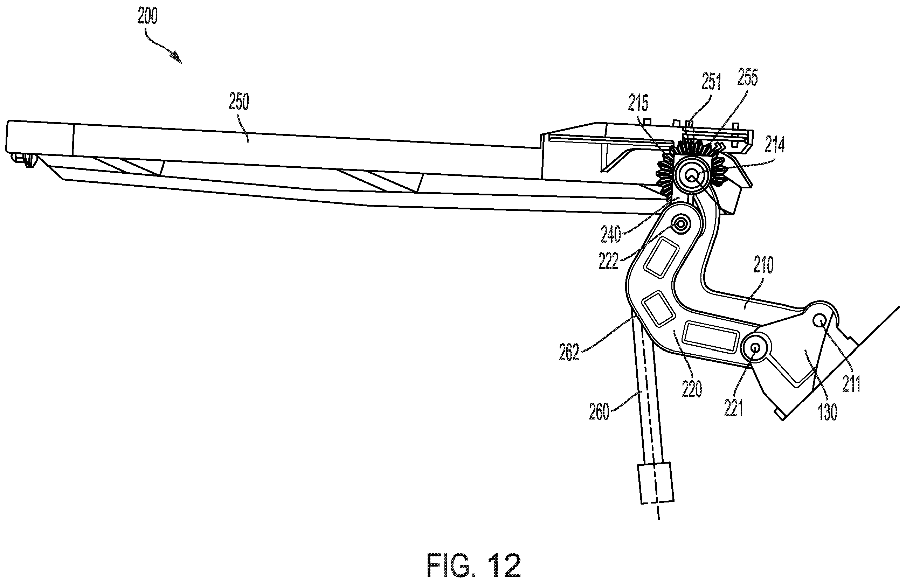

FIG. 10 is a perspective view of an exemplary embodiment of the multi-axis hinge mechanism 200 of FIG. 6A in a second open position. FIG. 11 is a side view of the multi-axis hinge mechanism 200 of FIG. 6A in a second open position. FIG. 12 is a bottom view of the multi-axis hinge mechanism 200 of FIG. 6A in a second open position.

The pivoting motions of the first arm 210 and the second arm 220 that bring the multi-axis hinge mechanism 200 to the second open position may combine in such a way as to resemble an outward lateral motion for the vehicle door 300, such that the vehicle door 300 "pops out" horizontally with respect to the vehicle 100 when moving from the first closed position to the second open position. The pivoting motions of the first arm 210 and the second arm 220 may also produce a first pivoting motion about the first gearbox post 241.

In one embodiment, the first gear 215 and the second gear 255 translate the first pivoting motion into a second pivoting motion of the second gearbox rod 251. The second pivoting motion of the second gearbox rod 251 may in turn create a vertical pivoting motion of the door frame 250 and the vehicle door 300, such that the vehicle door 300 pivots vertically with respect to the vehicle 100 when moving from the first closed position to the second open position.

In one embodiment, the pivoting motions of the first arm 210 and the second arm 220 may give the vehicle door 300 enough clearance from the vehicle 100 to complete the vertical pivoting motion without colliding into the vehicle 100 while avoiding collision with any nearby objects.

According to one embodiment, the net effect of the above described outward lateral motion and vertical pivoting motion is to open the vehicle door 300 while keeping the top-down profile of the vehicle 100 as narrow as possible, thereby minimizing the chance of the vehicle door 300 colliding with a nearby object, and further allowing for the vehicle door 300 to be designed with a longer silhouette than is industry standard. According to one embodiment, the multi-axis hinge mechanism 200 may also allow for the vehicle door 300 to be designed with a non-standard silhouette shape, including but not limited to an oval.

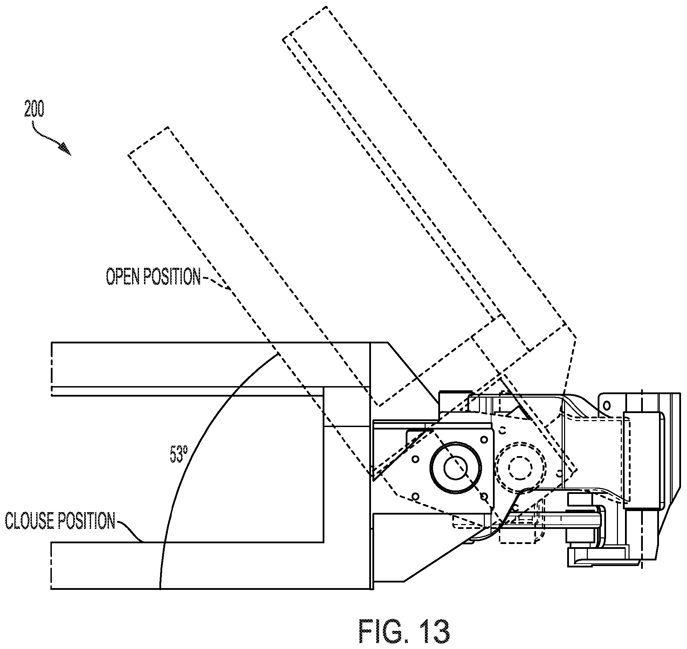

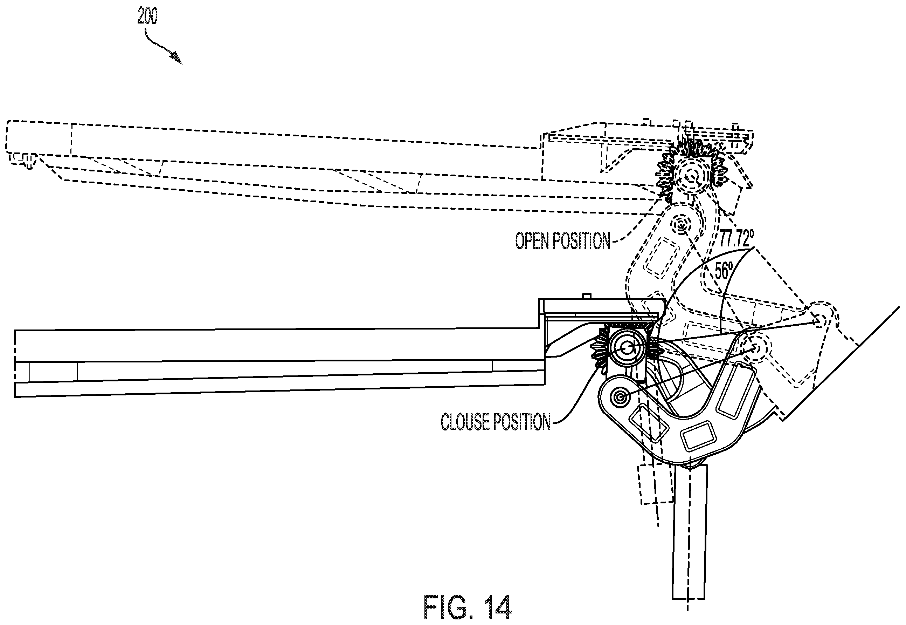

FIG. 13 is a side view of the multi-axis hinge mechanism 200 of FIG. 6A comparing the first closed position to the second open position. FIG. 14 is a bottom view of the multi-axis hinge mechanism 200 of FIG. 6A comparing the first closed position to the second open position.

According to one embodiment, the first arm 210 pivots at the first pivot joint 211 in a 56-degree arc between the first closed position and the second open position. According to one embodiment, the second arm 220 pivots at the second pivot joint 221 in a 77.72-degree arc between the first closed position and the second open position while producing the first pivoting motion about the first gearbox post 241. According to one embodiment, the second gearbox rod 251 may pivot in a 53-degree arc between the first closed position and the second open position while completing the second pivoting motion.

While this disclosure makes reference to exemplary embodiments, it will be understood by those skilled in the art that various changes in form and details may be made therein without departing from the scope of the claimed embodiments.

## Claims

1. A system for controlling the operation of a window installed in a door of a vehicle, the system comprising:
- a control module;
- a vehicle door configured to move upwardly from a closed position to a fully open position;
- a window configured to move between a first up position and a second down position in which the window is stored in the vehicle door; and
- a mechanism to move the window between the first up position and the second down position;
- **characterized in that** the control module is configured to direct the mechanism to move the window into the second down position when the control module has received a signal indicating that action has been taken to move the vehicle door towards the fully open position and that a position of the vehicle door exceeds a predetermined threshold away from the closed position.

2. The system of claim 1, wherein the system includes a window sensor that detects the position of the window and provides a window signal to the control module that is representative of the position of the window.

3. The system of claim 2, wherein the control module directs the mechanism to move the window into the second down position when the position of the window is indicated to be a predetermined amount away from the second down position.

4. The system of claim 1, wherein the system operates to reduce the vertical profile of the vehicle door when the vehicle door is in the fully open position.

5. The system of claim 1, wherein the control module is configured to direct the mechanism to move the window into the first up position when the control module has received a signal indicating that action has been taken to move the vehicle door towards the closed position.

6. The system of any of the preceding claims, wherein the vehicle door is a scissor door.

7. The system of any of the preceding claims, wherein the vehicle door is configured to move upwardly from the closed position to the fully open position by means of a multi-axis hinge.

## Patentansprüche

1. System zum Steuern des Betriebes eines Fensters, das in einer Tür eines Fahrzeugs installiert ist, wobei das System umfasst:
- ein Steuermodul;
- eine Fahrzeugtür, die dazu eingerichtet ist, sich aus einer geschlossenen Position aufwärts in eine vollständig offene Position zu bewegen;
- ein Fenster, das dazu eingerichtet ist, sich zwischen einer ersten, oberen Position und einer zweiten, unteren Position, in der das Fenster in der Fahrzeugtür verstaut ist, zu bewegen; und
- einen Mechanismus zum Bewegen des Fensters zwischen der ersten, oberen Position und der zweiten, unteren Position;
- **dadurch gekennzeichnet, dass** das Steuermodul dazu eingerichtet ist, den Mechanismus anzuweisen, das Fenster in die zweite, untere Position zu bewegen, wenn das Steuermodul ein Signal empfangen hat, das angibt, dass eine Aktion unternommen wurde, um die Fahrzeugtür in Richtung der vollständig offenen Position zu bewegen, und dass eine Position der Fahrzeugtür eine zuvor festgelegte Entfernungsschwelle, von der geschlossenen Position aus gesehen, überschreitet.

2. System nach Anspruch 1, wobei das System einen Fenstersensor aufweist, der die Position des Fensters detektiert und ein Fenstersignal, das für die Position des Fensters repräsentativ ist, an das Steuermodul übermittelt.

3. System nach Anspruch 2, wobei das Steuermodul den Mechanismus anweist, das Fenster in die zweite, untere Position zu bewegen, wenn angegeben ist, dass sich die Position des Fensters um einen zuvor festgelegten Betrag von der zweiten, unteren Position entfernt befindet.

4. System nach Anspruch 1, wobei das System das vertikale Profil der Fahrzeugtür reduziert, wenn sich die Fahrzeugtür in der vollständig offenen Position befindet.

5. System nach Anspruch 1, wobei das Steuermodul dazu eingerichtet ist, den Mechanismus anzuweisen, das Fenster in die erste, obere Position zu bewegen, wenn das Steuermodul ein Signal empfangen hat, das angibt, dass eine Aktion unternommen wurde, um die Fahrzeugtür in Richtung der geschlossenen Position zu bewegen.

6. System nach einem der vorangehenden Ansprüche, wobei die Fahrzeugtür eine Scherentür ist.

7. System nach einem der vorangehenden Ansprüche, wobei die Fahrzeugtür dazu eingerichtet ist, sich mittels eines mehrachsigen Scharniers aus der geschlossenen Position aufwärts in die vollständig offene Position zu bewegen.

## Revendications

1. Un système destiné au contrôle du fonctionnement d'une vitre installée dans la porte d'un véhicule, le système comprenant :
- un module de contrôle ;
- une porte de véhicule configurée pour se déplacer vers le haut à partir d'une position fermée en direction d'une position d'ouverture complète ;
- une vitre configurée pour se déplacer entre une première position, à savoir une position haute et une seconde position, à savoir une position basse dans laquelle la vitre est logée dans la porte du véhicule et
- un mécanisme conçu pour déplacer la vitre entre la première position, à savoir la position haute et la seconde position, à savoir la position basse ;
- le système se **caractérise par le fait que** le module de contrôle est configuré pour ordonner au mécanisme d'amener la vitre dans la seconde position, à savoir la position basse lorsque le module de contrôle a reçu un signal indiquant qu'une opération a été déclenchée pour déplacer la porte du véhicule en direction de la position d'ouverture complète et qu'une position de la porte du véhicule dépasse un seuil d'éloignement par rapport à la position fermée, ce seuil d'éloignement ayant été défini au préalable.

2. Le système de la revendication 1, qui prévoit que le système dispose d'un capteur de vitre, celui-ci détectant la position de la vitre et transmettant un signal de la vitre au module de contrôle, ce signal de la vitre étant représentatif de la position de la vitre.

3. Le système de la revendication 2, qui prévoit que le module de contrôle ordonne au mécanisme d'amener la vitre dans la seconde position, à savoir la position basse lorsqu'il est indiqué que la position de la vitre se trouve éloignée d'une quantité d'espace, définie préalablement, de la seconde position, à savoir la position basse.

4. Le système de la revendication 1, qui prévoit que le système réduit le profil vertical de la porte du véhicule lorsque la porte du véhicule se trouve dans la position d'ouverture complète.

5. Le système de la revendication 1, qui prévoit que le module de contrôle est configuré pour ordonner au mécanisme d'amener la vitre dans la première position, à savoir la position haute lorsque le module de contrôle a reçu un signal indiquant qu'une opération a été déclenchée pour déplacer la porte du véhicule en direction de la position fermée.

6. Le système d'une quelconque revendication précédente, la porte du véhicule étant une porte en élytre.

7. Le système d'une quelconque revendication précédente, qui prévoit que la porte du véhicule est configurée pour se déplacer vers le haut à partir de la position fermée en direction de la position d'ouverture complète au moyen d'une charnière multi-axes.
